(19) **Europäisches Patentamt / European Patent Office / Office européen des brevets**

(11) **EP 2 460 939 B1**

(12) **EUROPEAN PATENT SPECIFICATION**

(45) Date of publication and mention
of the grant of the patent:
**18.09.2019 Bulletin 2019/38**

(51) Int Cl.:
*E02D 1/02* (2006.01)     *G01N 33/24* (2006.01)
*G01N 9/10* (2006.01)     *G01N 11/12* (2006.01)

(21) Application number: **11192027.8**

(22) Date of filing: **05.12.2011**

(54) **Determination of a waterway characteristic**

Bestimmung einer Abflussöffnungseigenschaft

Détermination de la caractéristique d'un cours d'eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2010 GB 201020546**

(43) Date of publication of application:
**06.06.2012 Bulletin 2012/23**

(73) Proprietor: **dotOcean N.V.
8200 Brugge (BE)**

(72) Inventors:
• **Geirnaert, Koen
9031 Drongen (BE)**
• **Staelens, Peter
8000 Brugge (BE)**
• **Deprez, Sebastien
8650 Klerken (BE)**

(74) Representative: **Wauters, Davy Erik Angelo et al
DenK iP bvba
Leuvensesteenweg 203
3190 Boortmeerbeek (BE)**

(56) References cited:
**EP-A2- 2 136 180**     **WO-A2-2010/076295**
**DE-A1- 3 834 846**     **US-A- 4 492 111**
**US-A- 5 681 982**

• **NINA STARK ET AL: "Unraveling subtle details of expendable bottom penetrometer (XBP) deceleration profiles", GEO-MARINE LETTERS ; AN INTERNATIONAL JOURNAL OF MARINE GEOLOGY, SPRINGER, BERLIN, DE, vol. 29, no. 1, 29 July 2008 (2008-07-29), pages 39-45, XP019711643, ISSN: 1432-1157**
• **"NUMERICAL SIMULATIONS AND PREDICTIVE MODELS OF UNDRAINED PENETRATION IN SOFT SOILS", PhD dissertation in civil engineering, 31 August 2005 (2005-08-31), XP55025512, College Station, Texas, USA Retrieved from the Internet: URL:http://repository.tamu.edu/bitstream/h andle/1969.1/2555/etd-tamu-2005B-CVEN-Shi. pdf?sequence=1 [retrieved on 2012-04-24]**

## Description

### Field of the invention

The invention relates to the field of soil structure evaluation. More particularly, the present invention relates to methods and systems for analyzing the soil structure under a water column, e.g. for determining the nautical bottom level of a waterway.

### Background of the invention

Transport over water is becoming more and more important in a globalised economy. This results in more and bigger vessels and ships that need to enter harbors and inland waterways. Therefore the navigability of harbors and waterways need to be guaranteed. Deepening and widening of waterways and harbors is a constant activity done by authorities to ensure ships can pass and navigate. To determine the correct depth of the waterway and the dredging effort required, the physical parameters of the underwater soil structures need to be known.

In scientific terms the nautical bottom is the level where physical characteristics of the bottom reach a critical limit beyond which contact with a ship's keel influences the controllability and maneuverability.

To determine whether there is need to be dredged in order to make the waterway navigable, the characteristics or rheology of the underwater sediment and mud layers must be monitored and analyzed. The physical properties of the underwater sediment will influence the possibility of navigation through it (or just above it). The properties and characteristics of the fluid and partially consolidated mud is a very complex issue. Most of the techniques to determine the nautical bottom are based on density information because of the relatively easy way of measuring.

Today mainly density is measured as indicator for the nautical bottom, where the critical threshold is often put on 1200kg/m$^3$. These measurements are done with different type of equipment based on tuning forks, radioactive sources, etc.

Besides deepening of waterways also the identification and classification of soil structures is of importance when constructing under water or to identify underwater resources. In the identification and classification process the physical characteristics of the fluid and partially consolidated mud are important.

US4492111 describes a free falling or projectable penetrometer for simultaneously determining a multiplicity of ground characteristics during penetration and retracking cycles and while at rest following full penetration. US5,681,982 describes an apparatus and method for determining geotechnical and geoacoustic properties of seafloor sediment wherein the undrained shear strength and dynamic shear modulus of such sediments can be quantified. EP2136180 describes a method for measuring a rheological transition level between a first layer and a second layer.

### Summary of the invention

It is an object of the present invention to provide good impact devices, such as e.g. free fall penetrometers, and corresponding systems and methods for determining physical parameters of underwater soil structures, such as for example for determining the nautical bottom level. It is an advantage of embodiments according to the present invention that systems and methods are provided for determining physical parameters like density and shear stress of underwater soil structures. It is an advantage of embodiments according to the present invention that soil structure, soil type and nautical bottom can be derived from such parameters.

It is an advantage of embodiments of the present invention that methods and systems are provided adapted for analyzing the combination of physical parameters in parallel to determine the nautical bottom. It is an advantage of embodiments according to the present invention that the impact device can measure the critical depth in a full continuous measurement. It is an advantage of embodiments according to the present invention that the systems are adapted in mechanical design so as to allow penetration of the mud layers without disturbing or with minimal disturbance of the measured layer. It is an advantage of embodiments according to the present invention that the systems can be adapted in electronics design and specific in sensor integration to analyze the underwater mud layer and detect the nautical bottom.

It is an advantage of embodiments according to the present invention that determination of physical parameters is not only based on a relation between density and rheology. This more complete approach advantageously results in the possibility of obtaining a more complete picture of the nautical bottom level. It is an advantage that shear-strength, rigidity and viscosity also can be taken into account in methods and/or systems of embodiments according to the present invention, as these typically may have an important influence on the determination of the nautical bottom level. It is an advantage of embodiments according to the present invention that the measurement is limited or not influenced by sediment thixotropy. Some non-Newtonian pseudoplastic fluids show a time-dependent change in viscosity, which can be more easily measured with embodiments of the present invention.

It is an advantage of embodiments according to the present invention that parameter such as required dredging power for dredging the different soil layers can be derived, as well as the nautical bottom of the waterway, the soil structure and the identification of the soil type.

The above objective is accomplished by a method and device according to the present invention.

The present invention relates to a computerized system as set out in the independent claim. It is an advantage of embodiments according to the present invention that a system is provided that allows obtaining accurate information regarding a nautical bottom level, soil level and/or soil structure of a waterway. It is an advantage of embodiments according to the present invention that an accurate determination of the nautical bottom level can be obtained. It is an advantage of embodiments according to the present invention that information regarding nautical bottom level, soil structure and/or soil type can be obtained using captured data during a continuous single falling path of the free fall object.

It is an advantage of embodiments according to the present invention that a processing means is provided allowing determining the nautical bottom level, which is an important level for navigation. It is an advantage of embodiments according to the present invention that information can be determined on a sudden point of the water way quickly, using a single measurement.

The system may be adapted for co-operating with or comprising the free fall object and the processing means being programmed for taking into account mass information of the free fall object and information regarding at least one dimension of the free fall object. It is an advantage of embodiments according to the present invention that a system is provided that allows obtaining accurate information by calculation based on a number of parameters that can be measured using one or more sensors.

The free fall object may be an elongated object, and the processing means may be programmed for taking into account a side surface along the length of the elongated object for determining said at least one of a density, a viscosity or a depth of a soil. It is an advantage of embodiments according to the present invention that the system can use conventional free fall objects, such as for example free fall penetrometers. It is an advantage of embodiments according to the present invention that light weight free fall penetrometers can be used. It is an advantage of embodiments according to the present invention that free fall objects with a mass between 0,1kg and 10kg can be used.

The processing means may be programmed for taking into account a diameter of the free fall object. It is an advantage of embodiments according to the present invention that the diameter, e.g. the surface area of the top of the free fall object and thus a pore pressure thereon, can be neglected if the diameter to length ratio of the free fall object is smaller than 0,1, advantageously smaller than 0,05 or smaller than 0,01. The processing means may be programmed for taking into account any or a combination of a volume, length, drag coefficient or friction coefficient of the free falling object.

The processing means furthermore may be programmed for taking into account a pressure measurement obtained with said free fall object and/or optical or mechanical sensor measurements, e.g. drag force measurements, obtained with said free fall object. It is an advantage of embodiments according to the present invention that additional information can be taken into account for deriving any of the density, or depth.

A pressure sensor may be provided in a head of the free falling object for taking into account a pore pressure on the free fall object.

The processing means may be adapted for using said pressure or optical or mechanical sensor measurements for cross-checking, compensating or fine-tuning the obtained values of the density or depth. It is an advantage of embodiments according to the present invention that the system can determine one or more of the density or depth based on said accelerometer data and that information of additional sensors can be used for cross-checking or fine-tuning results.

The processing means may be programmed for deriving a shear stress based on said optical or mechanical sensor measurements and for deriving said density, viscosity or depth based on said shear stress.

The system furthermore may be adapted for deriving a shear stress. It is an advantage of embodiments according to the present invention that density depth as well as shear stress can be determined during a single fall of the free fall object, resulting in an efficient system.

The free fall object may comprise an array of optical or mechanical sensors along the length of the free fall object, and the processing means being adapted for deriving a shear stress on the free fall object as function of velocity. It is an advantage of embodiments according to the present invention that not only shear stress can be determined, but that shear stress can be determined as function of velocity. It furthermore is an advantage of embodiments according to the present invention that shear stress as function of velocity can be obtained requiring only data for a single fall of the free fall object.

The computerized system may be a free fall object, whereby the input means and processing means are integrated in the free fall object. It is an advantage of embodiments according to the present invention that the different components required for obtaining accurate measurements of the nautical bottom level, the soil structure or soil type can be obtained with a single integrated system.

The free fall object also may comprise a transmission means for transmitting results to a position above the water surface of the waterway. It is an advantage of embodiments according to the present invention that results can directly be consulted on a position above the water surface of the waterway.

The processing means furthermore may be adapted for deriving one or more of a nautical bottom level, soil type or soil structure based on said density, viscosity and/or depth. It is an advantage of embodiments according to the present invention that information directly usable for evaluating navigation can be obtained.

The present invention also relates to a method for obtaining information regarding a waterway according to the independent method claim. Deriving may comprise taking into account mass information and information regarding at least one dimension of the free fall object from which the accelerometer data are obtained. Deriving may comprise taking into account a side surface along the length of the free fall object used for determining said at least one of a density, a viscosity or a depth of a soil. Deriving may comprise taking into account a diameter of the free fall object. Deriving may comprise taking into account a pressure measurement obtained with the free fall object and/or optical or mechanical sensor measurements obtained with the free fall object. The method may comprise using the optical or mechanical sensor measurements for deriving a shear stress and determining from the shear stress any of the density, viscosity or depth for cross-checking the values of the density, viscosity or depth obtained using the accelerometer data.

The method furthermore may comprise deriving a shear stress based on the accelerometer data.

The method may comprise deriving a shear stress as function of velocity based on a single fall experiment of a free fall object.

The method may comprise transmitting the processed results from a processor on the free fall object to a position above the water surface of the waterway.

The present invention also relates to a free fall impact device for obtaining information regarding a waterway according to the free fall impact device of the independent claim.

The present invention also relates to a computer program product adapted for, when run on a computer, performing a method as described above. The computer program product may be a web application.

The present invention also relates to a data carrier comprising a computer program product as described above and to the transmission of a computer program product over a network.

A free fall impact device for obtaining information about a waterway is also described, the free fall impact device being an elongated free fall impact device and comprising an array of optical and/or mechanical sensors arranged along a length of the elongated free fall impact device. It is an advantage of embodiments according to the present invention that a system is provided allowing to derive shear stress as function of speed based on a single free fall experiment. The free fall impact device may comprise a processing means being programmed for deriving, based on data obtained from said array of optical and/or mechanical sensors and based on depth measurements correlated with said optical or mechanical sensor measurements, a shear stress as function of velocity. The free fall impact device furthermore may comprise a computerized system as described above.

A computerized system for obtaining information of a waterway is also described, the computerized system comprising an input means for obtaining optical or mechanical sensor measurement data from an array of optical and/or mechanical sensors along a length of an elongated free fall object and depth measurement data, and a processing means being programmed for correlating said depth measurement data with said optical or mechanical sensor measurement data and for deriving, based on the correlated measurement data, a shear stress as function of velocity.

A computerized method for obtaining information regarding a waterway is also described, the method comprising obtaining optical and/or mechanical measurement data from an array of optical or mechanical sensors along a length of an elongated free fall object and depth measurement data, correlating said depth measurement data with said optical or mechanical sensor measurement data, and deriving, based on the correlated measurement data, a shear stress as function of velocity.

A computer program product adapted for, when run on a computer, performing a method as described above is also described. The computer program product may be a web application. A data carrier comprising such a computer program product and transmission of such a computer program product is also described.

A free fall impact device for obtaining information about a waterway is also described, the free fall impact device comprising a tuning fork mounted to a head of the free fall impact device for directly measuring a density during the falling path of the free fall impact device.

A free fall impact device for obtaining information about a waterway is also described, the free fall impact device comprising an array of resistance measurement elements for measuring a resistance of a sediment in the waterway during the falling path of the free fall impact device.

A free fall impact device for obtaining information about a waterway is also described, the free fall impact device comprising at least two pressure sensors, wherein one pressure sensor is positioned in a head of the free falling impact device and one in a tail of the free falling impact device, for deriving a density based on a pressure difference measured between the at least two pressure sensors.

A free fall impact device for obtaining information about a waterway is also described, the free fall impact device comprising a sample capturing device for capturing a sample of a sediment during the falling path of the free fall impact device. The sample capturing device may comprise a sampler tube and a ball valve on the end of the sampler tube for keeping the sampled sediment in the tube upon retrieving the free fall device.

It is an advantage of embodiments of the present invention that the system may allow deep intrusion of mud layers. The latter can enable detection of critical layers on the bottom of water columns.

It is an advantage of embodiments according to the present invention that accurate detection of the soil type including of the nautical bottom can be obtained. The high degree of accuracy can be, according to some embodiments, supported by electronic measurements of intrusion parameters.

It is an advantage of embodiments according to the present invention that advanced data analysis may assist in more accurate identification of soil characteristics including the nautical bottom.

It is an advantage of embodiments of the present invention that the cost of operation of the system can be low. The system can be made easy to handle, e.g. as it can be made small in size. The system according to some embodiments can be operated from a small vessel or rib.

It is an advantage of embodiments according to the present invention that methods and systems can be provided resulting in an easy, reliable and/or consistent operation. According to some embodiments, the robust design can assist in reliable operation. According to some embodiments, the impact device can be dropped in all directions and will adjust itself to the appropriate direction of impact.

A free fall penetrometer is described comprising a head suitable for impacting a layer at or near the bottom of a waterway and a distinguishable body, wherein the head has a largest diameter being larger than the diameter of the body along at least a portion of the length of the body. The portion may be at least 25% of the length of the body, at least 50% of the length of the body, at least 75% of the length of the body, or along the full length of the body. If it is only along a portion of the body, this portion may be positioned furthest away from the head.

A method for obtaining information about a waterway is also described, the method comprising receiving at least two sets of shear strength data for an area in space (e.g. a single point or a set of points for which a comparable sediment behavior is expected), a first set being obtained using a free fall penetrometer having an extended head compared to the full length of the body, as for example described above, and a second set being obtained using a free fall penetrometer having an extended head and an extended first portion of the sleeve compared to a remaining portion of the body, i.e. sleeve, as for example also described above. The method furthermore comprises determining, based on the two sets of data, the sleeve resistance.

A method for obtaining information about a waterway is described, the method comprising receiving shear strength data for a free fall penetrometer having a first speed at impact with a sediment on a given area and receiving shear strength data for a free fall penetrometer having a second speed at impact with a sediment on said given area, and determining from a ratio of the difference between the shear strengths for the first and the second speed to the difference between the first and the second speed a value for the viscosity of the sediment. The method may comprise varying the speed by varying the weight of the free fall penetrometer. The method may comprise varying the speed by varying the falling height (also referred to as falling depth) of the free fall penetrometer.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

**Short description of the drawings**

FIG. 1 illustrates an example of an impact device with integrated computerized system, according to an embodiment of the present invention.

FIG. 2 shows a force model on an impact device, as can be used in an embodiment of the present invention.

FIG. 3 illustrates a theoretical deceleration and speed curvers, as can be used in an embodiment of the present invention.

FIG. 4 illustrates a velocity profile of an in situ measurement of 10,5m depth, as can be obtained using an embodiment of the present invention.

FIG. 5 illustrates the energy loss measurements of a free fall device of an in situ measurement, as can be obtained using an embodiment of the present invention.

FIG. 6 illustrates a density profile made up based on a Reynolds formula, as can be used according to an embodiment of the present invention.

FIG. 7 illustrates an free fall device comprising a pressure sensor for determination of the depth and density of the penetrated layers, according to an embodiment of the present invention.

FIG. 8 illustrates an free fall device comprising a tuning fork, according to an embodiment of the present invention.

FIG. 9 illustrates an free fall device comprising a rotating element to measure soil resistance, according to an embodiment of the present invention.

FIG. 10 illustrates an free fall device comprising a shear stress sensors, according to an embodiment of the present invention.

FIG. 11 illustrates an free fall device comprising a resistive measurement system, according to an embodiment of the present invention.

FIG. 12 illustrates a free fall device comprising a sampling means for sampling, according to an embodiment of the present invention.

FIG. 13 illustrates an example of two velocity curves determined using accelerometry and pressure sensor measurements and from which density can be determined, illustrating features and advantages of embodiments according to the present invention.

FIG. 14(a) and (b) illustrates the acceleration and velocity as function of depth as obtained through accelerometric measurements, according to embodiments of the present invention.

FIG. 15 (a) and (b) illustrates the density and shear stress as function of depth as obtained through calculation of the losses of the instrument, according to an embodiment of the present invention.

FIG. 16 illustrates the viscosity as function of depth as derived from the speed and the shear stress, according to an embodiment of the present invention.

FIG. 17 illustrates a free fall penetrometer according to an embodiment of an aspect of the present invention wherein the head of the free fall penetrometer has a largest diameter larger than the diameter of the sleeve along its full length.

FIG. 18 illustrates a free fall penetrometer according to an embodiment of an aspect of the present invention wherein the head and a portion of the sleeve of the free fall penetrometer has a largest diameter larger than the diameter of the remaining portion of the sleeve along its length.

FIG. 19 illustrates experimental results of shear stress obtained using a free fall penetrometer as shown in FIG. 17 and FIG. 18 as well as the sleeve resistance obtained based on the shear strenght results thus obtained.

FIG. 20 illustrates the determination of the viscosity of a sediment using shear strength measurements for different speeds of the impacting free fall penetrometer impacting a region of interest, according to an embodiment of the present invention. The drawings are only schematic and are non-limiting. In the drawings, the size of some of the elements may be exaggerated and not drawn on scale for illustrative purposes.

## Detailed description of illustrative embodiments

In the following detailed description, specific details are set forth in order to provide a thorough understanding of the invention and how it may be practiced in particular embodiments. However it will be understood that the present invention may be practiced without these specific details. In other instances, well-known methods, procedures and techniques have not been described in detail, so as not to obscure the present invention. While the present invention will be described with respect to particular embodiments and with reference to certain drawings, the reference is not limited hereto. The drawings included and described herein are schematic and are not limiting the scope of the invention. It is also noted that in the drawings, the size of some elements may be exaggerated and, therefore, not drawn to scale for illustrative purposes.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be understood that the terms used in embodiments of the invention described herein are capable of operation in other orientations than described or illustrated herein.

It is to be understood that the term "comprising" should not be interpreted as being restricted to the steps or elements listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B.

Where in embodiments according to the present invention reference is made to a waterway, reference is made to a navigable body of water, such as a river, channel, canal, sea, lake or ocean.

Where in embodiments according to the present invention reference is made to "nautical bottom" or "nautical bottom level", reference is made to the depth where physical characteristics of the bottom of a waterway reach a critical limit beyond which normal navigation is not possible. The nautical bottom can be defined as the level where physical characteristics of the bottom reach a critical limit beyond which contact with a ship's keel influences the controllability and maneuverability.

Where in embodiments according to the present invention reference is made to "soil structure" and "soil type" or "soil type identification", reference is made to the classification of the soil type based on the physical parameters of the measured soil. Based on for example the density, shear stress, viscosity and other physical parameters a soil type can be identified.

Where in embodiments according to the present invention reference is made to an accelerometer, reference is made to a device adapted for determining acceleration or deceleration of an object.

Where in embodiments according to the present invention reference is made to shear stress, reference is made to stress applied parallel or tangential to a face of a material.

Where in embodiments according to the present invention reference is made to density, reference is made to typical levels that are used in harbors to determine the nautical bottom. The nautical bottom is set on the depth where the mud reaches a density level of 1200kg/m$^3$.

Where in embodiments according to the present invention reference is made to a soil type identification, reference is made to the classification of the soil type based on the physical parameters of the measured soil.

In a first aspect, the present invention relates to a computerized system for obtaining information regarding a waterway. Such information may for example be a nautical bottom level, although other information such as for example a soil type or a soil structure or information related thereto also may be obtained. The computerized system is a system comprising an input means for receiving accelerometer data from an accelerometer positioned on an impact device, e.g. free fall device like a free fall penetrometer. Such input means may be adapted for receiving the data in real time, quasi real-time or from a storage. The system furthermore comprises a processing means or processor, being programmed for deriving, based on the accelerometer data, at least a density of a soil by solving the energy balance equation of a free fall impact device under water using the potential energy and kinetic energy and loss terms for bouyancy and drag based on the speed and the position as determined from accelerometer data and further based on at least a predetermined experimental drag coefficient, the mass and the volume of the free-fall impact device. In advantageous embodiments, also a shear stress may be derived. The processor may be any type of processor such as a general purpose processor programmed to perform this derivation or a specific purpose processor designed for performing such derivation. It may e.g. be a microprocessor, an FPGA, .... Based on the derived one or more of these properties, a characteristic parameter such as a nautical bottom level, a soil type or a soil structure can be determined. It is an advantage of embodiments according to the present invention that such characterisation can be performed during a continuous single falling path of the free fall object.

As indicated above, the computerized system comprises a processor. According to embodiments of the present invention, the processor is adapted for determining a nautical bottom level, a soil structure, a soil type, etc. The processor as described above may comprise a means for deriving, from acceleration data and optionally one or more pressure, acoustic, resistive and other physical and chemical information from impacting a mud layer, information about the waterway. The processor may be adapted for detecting, based on the received information, a deceleration of the impact device stemming from penetration into a mud layer and related dissipated energy due to shear stress and pore pressure. The processor may be adapted for detecting, based on the received information, the density of the mud layer stemming from penetration into a mud layer. The processor may be adapted for detecting, based on the received information, the depth of mud layers with a sudden density stemming from penetration into a mud layer. The data may be adapted for detecting, based on the received information, the depth of mud layers with a sudden shear strength stemming from penetration into a mud layer. The data processor may be adapted for detecting, based on the received information, the depth of mud layers with a sudden resistivity stemming from penetration into a mud layer.

The data processor may furthermore comprise a means for coupling position information regarding a position of the impact device impact device to the information regarding the type of soil structure obtained with the impact device.

The computerized system may be integrated in a free fall impact device, or in other words embodiments of the present invention also relate to a free fall impact device comprising such a computerized system. Alternatively, the computerized system also may be separate from the free fall impact device, and may for example typically be positioned on a ship or on shore during the free fall impact measurement.

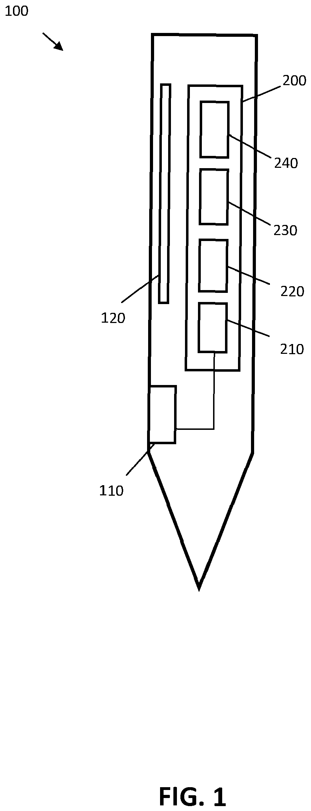

By way of illustration, an exemplary system according to one embodiment of the present invention is shown in FIG. 1. FIG. 1 provides a schematic representation of a free fall impact device 100, comprising at least one accelerometer 110 and a computerized system 200 comprising at least an input means 210 for receiving data comprising at least accelerometer data and a processor 220 for deriving properties or characteristics based on the received data. The computerized system 200 furthermore optionally also may comprise a memory 230 for receiving data from at least one sensor device and for storing said data, and/or an output means 240, such as for example any of an output port, a network connection such as a wireless network connection, etc. The impact device furthermore may comprise an interface for connecting to a computing and/or displaying device once the impact device is recovered from under the water surface.

The free fall impact device also may comprise one or more further sensors 120. Examples of sensors that may be provided are pressure sensors in the head, pressure sensors in the tail, optical and/or mechanical sensors, arrays of optical and/or mechanical sensors, resistance sensors, arrays of resistance sensors, additional accelerometers, shear stress sensors, differential pressure sensors, etc. A number of such sensors is discussed with reference to particular embodiments, which can be combined with other embodiments of the present invention, such combinations herewith also being envisaged within the present invention. Typically one of more of these sensors may be integrated and may be adapted for sensing, during free fall or upon impact with the soil under water, parameters for determining e.g. physical characteristics of the waterway, e.g. underwater sediment layers. The impact device furthermore may comprise a control means for controlling the speed, spin and torque of the free fall impact device.

In one embodiment, the system may comprise at least a first and second impact device, wherein at least one of the first and second impact device is an impact device as described above and wherein the first and second impact device are adapted for simultaneous use and are adapted for acting as a sender respectively receiver in a resistive, acoustic or electromagnetic measurement.

By way of illustration, embodiments of the present invention not being limited thereto, and without being bound to theory, an example of how properties can be derived from data in one particular example will be further explained below. It is to be noticed that the formalism used is only one example of the principles that can be used according to embodiments of the present invention.

According to embodiments of a first aspect of the present invention the free fall impact device comprises at least one accelerometer. Measurements of deceleration and/or acceleration can be obtained using the accelerometer. In one embodiment, by integrating accelerometer measurement data over time also speed of the free fall Penetrometer can be determined and further, by integration of speed over time also position can be determined.

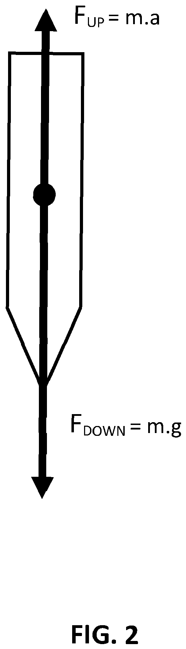

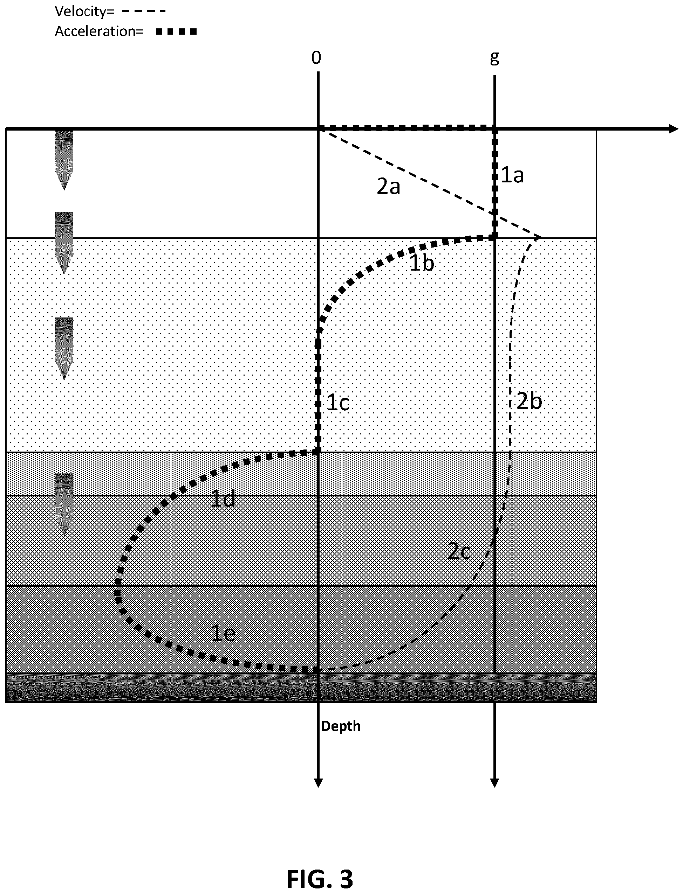

FIG. 2 is illustrating the forces that are working on an free fall impact device in a fluid. The downward force is the gravity. The upward force is a combination of buoyancy force and the drag force that are opposite to the gravity. FIG. 3 is illustrating the behavior of the free fall impact device in a mud layer under water starting from the launch above water. When holding the impacting device before launch the acceleration and speed are zero. Once releasing the impact device the acceleration in air is 1g (1a in figure) and the speed is linear increasing (2a in figure). When impacting the water, the upward force is increasing strongly and the impacting device is decelerating (1b in figure). Under water there is the upward buoyancy force and the drag force that are opposite to the gravity. The drag force is depending on the speed of the impact device and at a sudden speed the buoyancy and drag force will compensate the gravity and the net force on the impact device is zero (1c in figure). At that moment the device has reached its terminal velocity.(2b in figure). At the moment the impact device reaches the mud layer the deceleration is increasing strongly (1d in figure). The speed of the impact device is decreasing (2c in figure) and the related drag force too. Due to the reducing drag force, the deceleration reaches a maximum and decreases till zero (1e in figure).

According to one embodiment, based on the acceleration, speed and position parameters derived based on accelerometer measurement data, the energy balance equation of the free fall Penetrometer can be solved, e.g. taking into account the processes described in FIG. 1 and FIG. 2. In what follows, the fluid sediment is considered to be a Newtonian fluid, which is an approximation. This approximation nevertheless provides sufficiently accurate results on derived parameters such as density. Consequently, density and other parameter referred to in the description refer to Newtonian fluid behavior. At the starting point, which is a drop level above the water the free fall impact device has a sudden potential energy. By dropping the free fall impact device, potential energy is transferred in to kinetic energy. At the moment of impact with the water surface the free fall Penetrometer is decelerated. This level of impact can be determined as the starting point of the depth measurements. Once under water the free fall Penetrometer accelerates till it reaches the terminal velocity $V_{terminal}$. The terminal velocity of an object underwater is given by

$$V_{terminal} = (m - \rho V)g / b,$$

where m is the mass of the penetrometer, $\rho$ is the density of the intruded fluid, g is the gravitation constant, b is the drag coefficient.

The energy balance equation at every small track with length h of the free fall path is given by

$$\frac{1}{2}mv_{in}^2 + mgh = \frac{1}{2}mv_{out}^2 + E_{loss}.$$

During the free falling path the falling object is using the potential energy to generate kinetic energy and to compensate for losses.

At terminal velocity the kinetic energy is constant since the speed is constant. Therefore the energy generated by the change in potential energy is fully dissipated. When the free fall Penetrometer decelerates there is more energy dissipated then the change in potential energy. There are three type of losses on the falling object that can be taken into account.

There are three type of losses on the falling object expressed in [J].

First we have losses that are caused by displacement of fluid during the falling path. These losses are determined by the formula $E_{buoyancy} = E_{displacement} = \rho V.g.h$ where $\rho$ is the density and V the volume, g the earth acceleration and h the falling height.

The second type of losses is the drag loss. The drag loss can for example be determined on 3 ways.

First if the speed of the falling device is low the drag loss is determined by laminar flows and hence determined by the formula $E_{drag} = b.v.h$ where b is a drag coefficient at low velocity (i.e. at low Reynolds number), v is the speed of the falling object and h is the falling height. The drag coefficient b is a unique parameter of the falling object and the drag coefficient is assumed to be constant over a sudden medium. During the falling process the different medium layers can be identified on the deceleration curve. On each medium layer an experimental drag coefficient will be used in the calculation. The use of the drag coefficient can be avoided in the equations by replacing the drag losses by shear stress losses.

Second if the speed of the falling object is high then the drag losses are caused by turbulent flows and are determined by the following formula $E_{drag} = \frac{1}{2}.\rho.A.C_d.v^2.h$ where $\rho$ is the density, v is the speed of the falling object, A is the surface of the falling object, $C_d$ is the drag coefficient at high velocity (i.e. at high Reynolds number) and h is the falling height. A and $C_d$ are characteristics of the falling object and therefore important in the determination of the density or viscosity. The drag coefficient $C_d$ is a unique parameter of the falling object and the drag coefficient is assumed to be constant over a sudden medium. During the falling process the different medium layers can be identified on the deceleration curve. On each medium layer an experimental drag coefficient will be used in the calculation. The use of the drag coefficient can be avoided in the equations by replacing the drag losses by shear stress losses.

Third way to determined the drag loss is via the shear stress on the sleeve of the falling object and is determined by the formula $E_{shear} = \tau.A.h$ where $\tau$ is the shear stress and A is the surface of the following object sleeve and h is the falling height.

In advantageous embodiments of the present invention, specific characteristics of the free fall impact device are taken into account in the processing for deriving one or more of a density, viscosity or depth. Typical characteristics of the free fall impact device that may be taken into account by the processor and that may be provided as input to the input means may be one or more of the mass, the side surface (sleeve surface) of the free fall impact device, the diameter of the free fall impact device, a surface area of the head of the free fall impact device, a volume of the free fall impact device, etc.

The third type of losses on the free falling object is the pore pressure that can be build up on the penetrating point of the falling object (=head of the object). This pore pressure is often omitted in the calculations but can be taken into account if an additional pressure sensor is foreseen in the head of the falling object. The power dissipated on the head can be derived from the measured pressure on the head by $p.A_1.v$, where $A_1$ is the surface of the head, p is the cone pressure due to additional pore pressure and v is the speed of the free fall penetrometer. Out of the equation

$$E_{loss} = E_{drag} + E_{displacement} = \rho.V.g.h + \frac{1}{2}.\rho.A.C_d.v^2.h$$ the density $\rho$ can be determined and once $\rho$ is set all the other parameters can be derived like shear stress $\tau$ and viscosity.

The computerized system and/or free fall impact device according to the first aspect may comprise additional components performing at least a part of the method steps described in the method aspect of the present invention or a particular embodiment thereof.

In a second aspect, the present invention also relates to a method for obtaining information about a waterway. The method comprises measuring the acceleration of a free fall impact device in a waterway and thereby acquiring accelerometer data and determining a speed of the free fall impact device by integration of the accelerometer data over time and for determining a position by integration of the speed over time. Said deriving comprises deriving at least a density of a soil by solving the energy balance equation of a free fall impact device under water using the potential energy and kinetic energy and loss terms for buoyancy and drag based on the speed and the position as determined from accelerometer data and further based on at least a predetermined experimental drag coefficient, the mass and the volume of the free-fall impact device. Obtaining information may for example comprise detecting the nautical bottom level under water, but also may include determining a soil structure or a soil type. The method according to embodiments of the present invention comprises receiving accelerometer data from an accelerometer of a free fall object and deriving, based on the accelerometer data at least one of a density, a viscosity or a depth of a soil. Additionally also shear stress may be determined. Receiving accelerometer data may comprise receiving accelerometer data via an input port based on measurements done in a remote free fall impact device or via an input means in direct connection with the accelerometer for an integrated computerized system. Receiving accelerometer data may for example comprise bringing an impact device comprising at least an accelerometers and advantageously also one or more of pressure sensors and shear stress sensors in free fall condition under the water surface, and inducing a deceleration due to impact on a mud layer under the water surface. The method also may comprise obtaining, upon penetration in mud layer, based on acceleration information, the kinetic energy, speed, position, shear stress and pore pressure for determining information of the waterway such as the nautical bottom in said sediment, a soil or mud structure, etc. The method also may comprise capturing one or more of a chemical signal, resistive measurements signal, acoustic backscatter measurement signal, a shock and ultrasonic test signal, an optical backscatter measurement signal and an electromagnetic backscatter measurement signal and based on these signals calculate the nautical bottom. The method further also may comprise obtaining position coordinates associated with the position of the impact device and coupling the position coordinates with information regarding the soil structure obtained with the impact device. The method furthermore also may comprise simultaneously using a second impact device and using the impact devices as sender and receiver in a resistive, acoustic or electromagnetic measurement.

Based on the acceleration, speed and position parameters, the dynamic equation of the free fall impact device can be solved. The dynamic equation of a free falling object under water is: $m\dfrac{d^2y}{dt^2} = (m - \rho V)g - b\dfrac{dy}{dt}$ where $\dfrac{d^2y}{dt^2}$ and $\dfrac{dy}{dt}$ are the acceleration and the velocity of the free fall impact device. The density $\rho$ and drag coefficient b are both parameters dependent on the intruded sediment type or mud type. The equation can also be set by replacing -bdy/dt by the high speed drag force $\frac{1}{2}.\rho.A.v^2.Cd$ in case the free fall object reaches higher speeds.

In order to determine the density of the mud layers in an alternative manner, e.g. as cross check, for confirmation or for fine tuning, additional methods can be applied, typically making use of additional sensors. Consequently, several additional sensors can be integrated in the free fall impact device. First way to measure density via a free fall impact device is to integrate two pressure sensors. One sensor is located close to the head of the free fall impact device and one is integrated close to the tail of the free fall impact device on a fixed distance from each other. Based on the Bernoulli formula the pressure difference gives an indication for the density as follows $\rho gh + \frac{1}{2}\rho v^2 + p = \text{constant}$. When working out the equation at each pressure sensor it shows that $\rho gh_1 + p_1 = \rho gh_2 + p_2$ because the fluid speed is constant in each point. This results in $\rho = \dfrac{p_2 - p_1}{gh}$ where h is the fixed distance between the two pressure sensors.

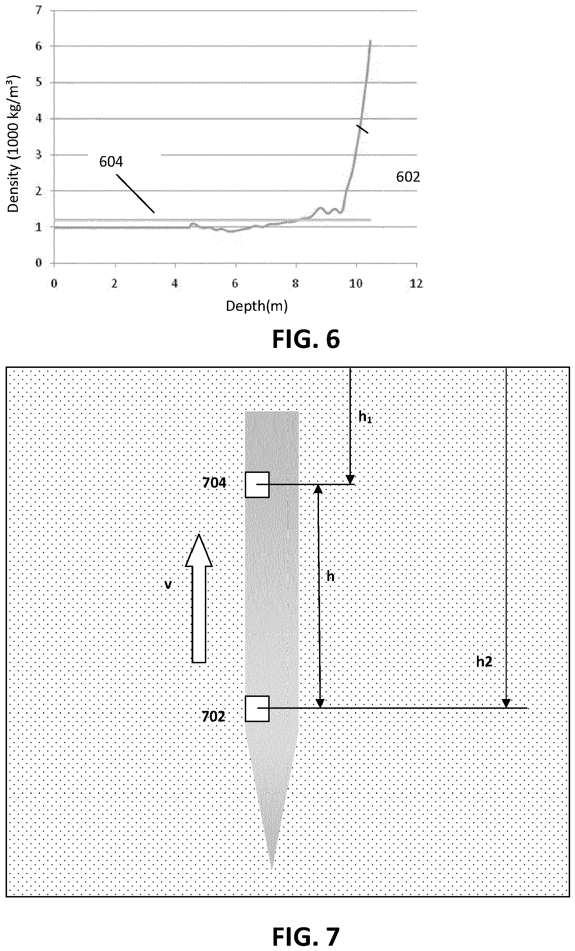

In one embodiment, the present invention also relates to a system and method for determining a density in a waterway or a soil structure thereof based on this principle. The system and method are adapted for determining density based on a pressure difference between two pressure sensors in a free fall impact device and based on the formula of Bernouilli. The principles also are shown in FIG. 7 whereby two integrated pressure sensors 702, 704 in an impact device are illustrated. The distance h1, the distance h between the sensors and the distance h2 as well as the fluid velocity v are also indicated. The results for this method can show some deviations from other methods since the pressure build up at the sensor will not be purely dependant on the depth and the density of the material but also from other effects like pore pressure. Pore pressure is a local pressure increase due to the sediment grains in the fluid mud that are acting like a local valve and avoiding the water in the mud flowing away at the top of the free fall impact device.

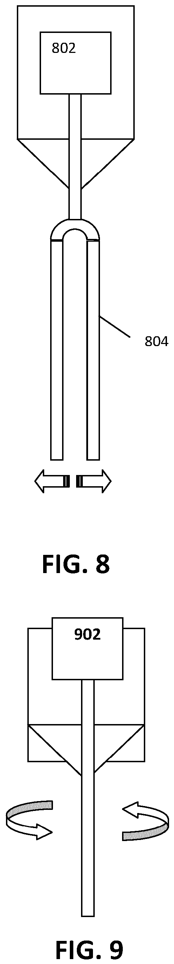

An alternative way to measure the density is via a tuning fork installed on the head of the free fall Penetrometer. The resonance frequency of the tuning fork is shifting dependant on the density variation of the intruded layers. In one embodiment, the present invention also relates to a system and method for determining a density in a waterway or a soil structure thereof based on a resonance shift occurring in a tuning fork of a free fall impact device. The tuning fork may comprise two elongated portions spaced apart from each other and may comprise a processor for monitoring the resonance shift. An example of such a system is shown in FIG. 8 whereby a piezo-transducer 802 and a tuning fork 804 are indicated.

In some embodiments according to the present invention, the system and method are adapted for determining a pore pressure. By way of illustration, two examples of how pore pressure can be measured are discussed. In one example, the pressure on the head can be measured using a movable head and a pressure sensor. The pressure that is build up on the head of the free fall impact device during the intrusion of a mud layer is a measure for the pore pressure. An alternative system and method for measuring a pore pressure is by using a permeable ring or several openings in the head of the free fall Penetrometer where the water, that is flowing away when mud is suppressed upon impact, can flow in. By this means the pressure of the water in the mud at impact is measured.

An alternative way to measure the shear stress is to introduce a rotating axis during the fee fall. The torque variation due to the friction on the rotating axis is a measure for the shear stress. The torque variation will result in a current variation of the driving motor 902. This current will be a measure for the shear stress. In one embodiment, the present invention also relates to a system and method for determining a shear strength in a waterway or a soil structure thereof based on a rotating element on the free fall impact device and by monitoring the rotation, e.g. monitoring the motor power of a rotating element. By way of illustration an example of such a system is shown in FIG. 9.

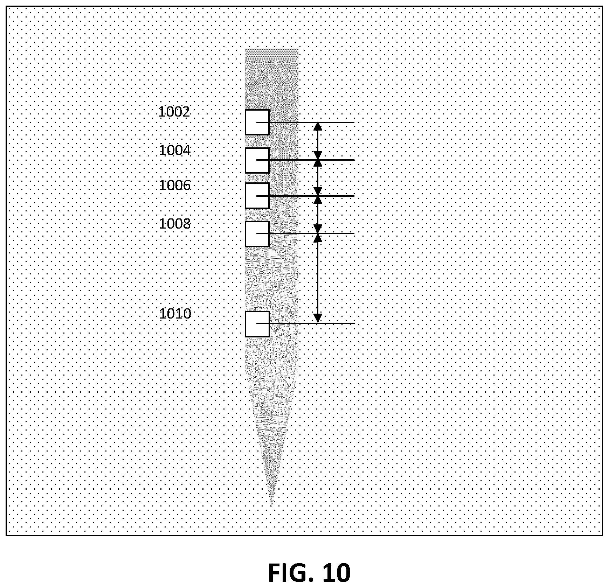

The shear stress can be directly measured by integrating a single or multiple shear stress in the sleeve of the free fall Penetrometer. This sensor can be an optical or mechanical shear stress sensor. The advantage of a having a string of shear stress sensors in the sleeve is the ability to measure the shear stress at different speeds at a sudden point. When the free fall Penetrometer is going through a mud layer it decelerates. At a sudden point a stack of vertical sensor is passing with different speed. So the shear stress is measured at different speeds in one point. Due to the non linear behavior and non-Newtonian behavior of mud the shear stress will be also non-linear over different speeds. Therefore this type of measurements can cover this non linear behavior. In one embodiment, the present invention also relates to a system and method for measuring the shear strength in a waterway or a soil structure thereof using an integrated stack of shear stress sensors 1002, 1004, 1006, 1008, 1010, allowing a method wherein monitoring of shear stress is performed in a single point at different speeds. A corresponding system is shown in FIG. 10.

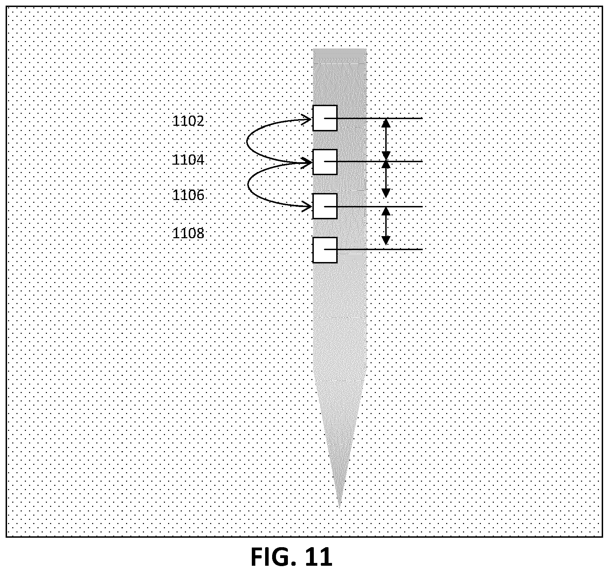

A system and method for measuring a salicity in a waterway or a soil structure thereof is also described. The system is adapted for measuring the electrical resistance between different points along the path of the free fall impact device, e.g. by one electrical resistance sensor or an array of electrical resistance sensors. In FIG. 11 a corresponding system is shown wherein alternatingly positive poles 1102, 1106 and negative poles 1104, 1108 are indicated.

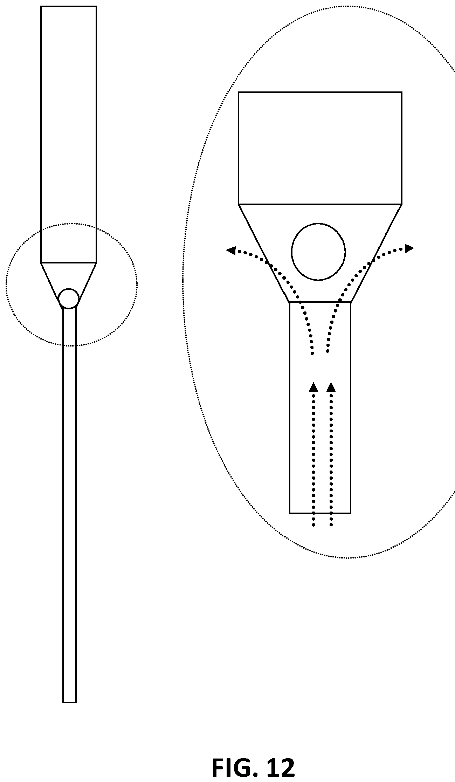

A system and method for obtaining information of a waterway is described, wherein the system and method is adapted for sampling a sediment during a free fall impact device. The free fall impact device comprises a sampling tube, typically positioned at a top of a free fall impact device. The sampling tube typically may be provided with a valve, so that a sample sediment is not lost when retrieving the free fall impact device from the water. The method comprises launching a free fall impact device, upon impact filling the sampling tube with liquid mud automatically due to the acceleration induced under free falling conditions. After the liquid mud is sampled, the method also comprises automatically closing a valve upon retrieval for assuring that the liquid is not flowing back when pulling out of the mud layer. An example of such a system is shown in FIG. 12.

The method furthermore may comprise method steps corresponding with the functionality of other components described for the system according to the first aspect of the present invention.

A computer program product adapted for, when run on a computer, performing a method as described above is also disclosed. The method may comprise receiving information regarding penetration of or removal from within a soil structure obtained with an impact device adapted for determining the nautical bottom and for processing said received information for determining the nautical bottom in the penetrated soil structure. The computer program product may be adapted for deriving deceleration information, speed, position, shear stress of the impact device and the soil structure and deriving based thereon soil characteristics including any of the nautical bottom, a soil type or a soil structure.

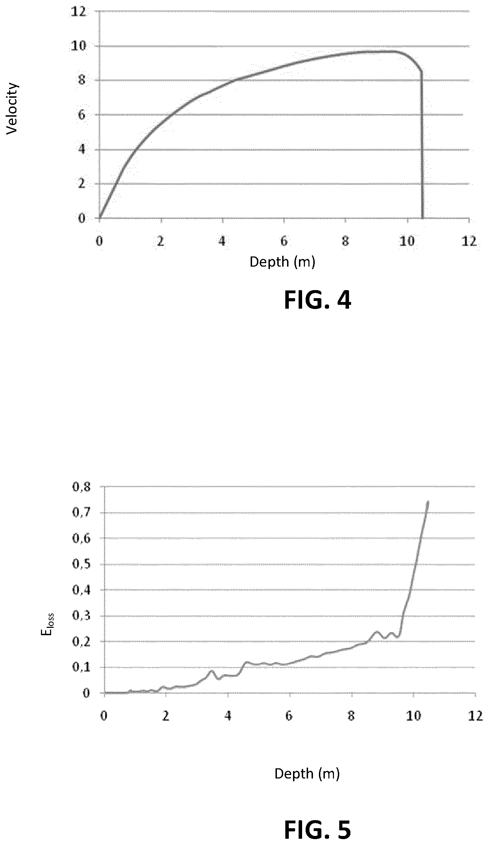

A data carrier comprising a computer program product as described above and/or the transmission of such a computer program product over a network is also disclosed. By way of illustration, an example of in situ measurements as can be obtained using a free fall impact device according to an embodiment of the present invention is shown with reference to FIG. 4 to FIG. 6. FIG. 4 is the result of an in situ measurement with a free fall Penetrometer with on board accelerometers. The accelerometer is measuring the acceleration or deceleration and by integration the velocity v can be determined. FIG. 4 shows the velocity evolution over de depth of the impacting device. FIG. 5 is the result of the free fall impact device losses for an in situ measurement. The losses are the sum of the shear strength losses of the intruding layers in combination with the displacement losses. FIG. 6 is the result of density 602 for an in situ measurement of the penetrated layers by the free fall impact device. The density 602 is calculated based on the losses via the displacement of the fluid mud by the free fall impact device in combination with the drag losses. An example of a limit value of 1200 kg/m$^3$ is also indicated by curve 604.

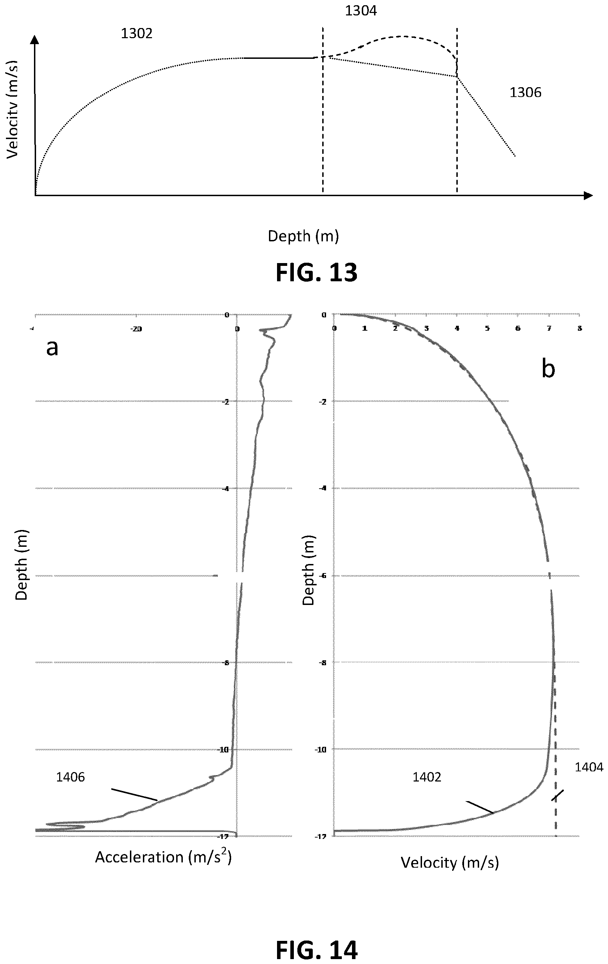

In one example, a method and system is described adapted for determining the top of a mud layer, by comparison of curves of velocity obtained through pressure measurement and using accelerometers. By way of illustration, an example of an algorithm is further described. Out of a measurement with a pressure sensor the depth can be derived by the formula p=p.g.h. By differentiating, the velocity of the penetrometer can be derived. The velocity can also be derived from the integration of the accelerations. Comparing the velocity curve derived from the pressure sensor and the velocity curve derived from the accelerometers, a deviation between the two curves can be observed at the top of the fluid mud layer. The increase of the density of the fluidum generates an increase of pressure on the sensor resulting in an apparent velocity increase, while the increase of the density of the fluidum, according to fluidum mechanics, generates a deceleration of the system. The exact displacement of the system is described by the accelerometers. The difference between the two curves is an indication for the density. FIG. 13 illustrates the two velocity curves determined using accelerometry and pressure sensor measurements, for a zone of liquid 1302, a zone of liquid mud 1304 and a zone of consolidated mud 1306.

In another example, methods and systems are provided wherein the top of a mud layer and the top of a consolidated mud layer is determined using an echosounder and acoustical data. Using particular frequencies, an echosounder can provide details of different soil layers. At a 210kHz frequency the top of the fluid mud layer is provided. Turbulence can disturbe this level and in that case the identification of the top layer with a density variation algoritme can provide a solution. Also the reological transient layer between fluid and consolidate mud can be identified as a variation in the rheology (shear stress and viscosity) and/or density. The consolidated hard layer is detected by a 33kHz of the echosounder.

In still another example, a system is provided wherein a free fall penetrometer comprising acoustic sensors is present. Using such a system an acoustic or seismic mapping can be done after penetrating the soil.

In yet another example, a system and method is provided wherein a correlation is made between a power dissipation and a dredging power. In such embodiments, the energy losses of a free fall penetrometer instrument in different soil layers is correlated with the energy required for dredging up the layers.

In still another exemplary embodiment, a system and method is provided wherein complementary data for CPT sounding is obtained for combining with free fall penetrometer data. Often when soil structures are need to be analyzed under a waterway or canal, there are CPT soundings taken on land next to the investigated waterway and the detected layers are extrapolated to the waterway. The new sediment layers in the waterway can not be derived from the CPT sounding. Therefore a few samples with the free fall Penetrometer in the waterway can complement the CPT sounding data on land.

By way of illustration, an example illustrating the use of acceleration measurements is now discussed with reference to FIG. 14 to FIG. 16. In FIG. 14 (a), the acceleration 1406 of the probe is depicted. Out of acceleration velocity 1402 is derived as depicted in FIG. 14 (b). A theoretical curve 1404 is known of a falling object in water. As soon as the theoretical curve is not fitting any more the probe is reaching a layer with higher density, typically the fluid mud layer.

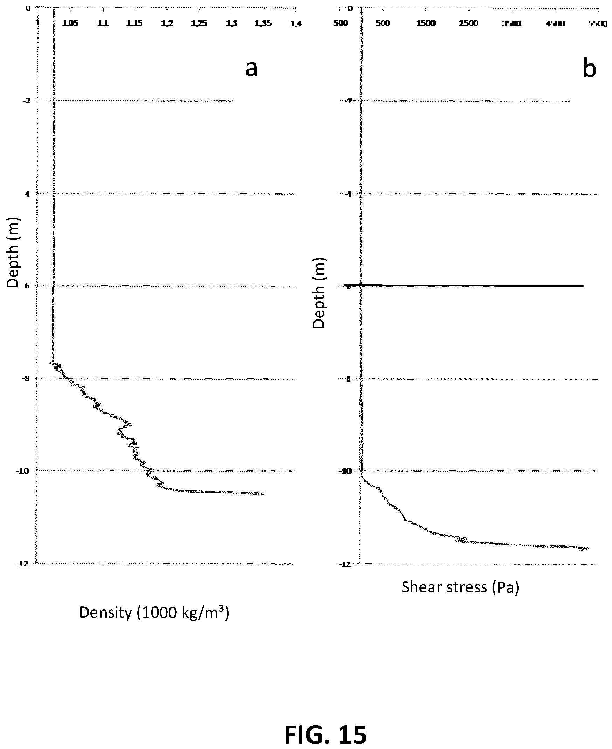

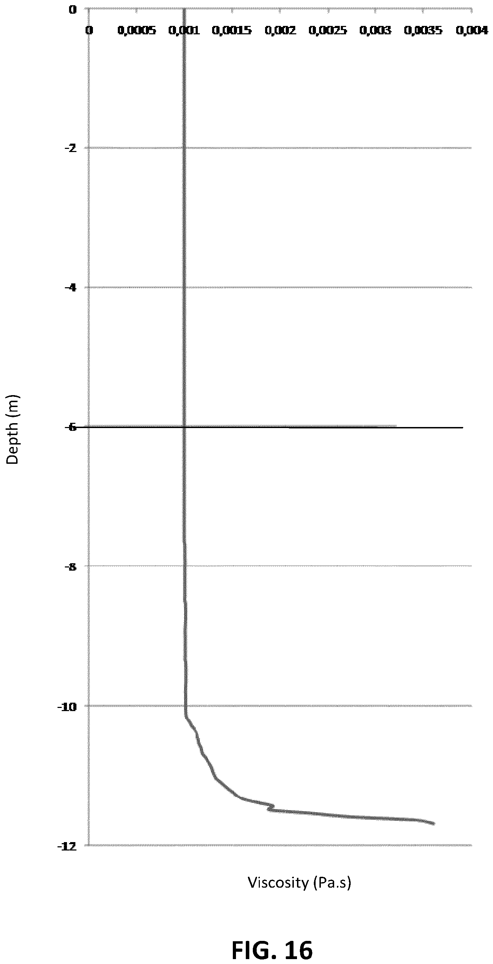

By calculating the losses of the instrument the losses are assigned to different forces. One of the forces is shear stress on the sleeve of the instrument. Out of the losses the shear stress is determined in FIG. 15 (b). Also the drag is responsible next to buoyancy for the losses. Out of the drag losses a density is derived with the formula $F_{drag}= C_d.\rho.v^2.A$ in fluid mud. This is depicted in FIG. 15 (a). In combination with the pressure sensore the density figure can be made more accurate if the depth is known out of the formula $p=p.g.h$. Out of the speed and the shear stress also viscosity can be derived as depicted in FIG. 16.

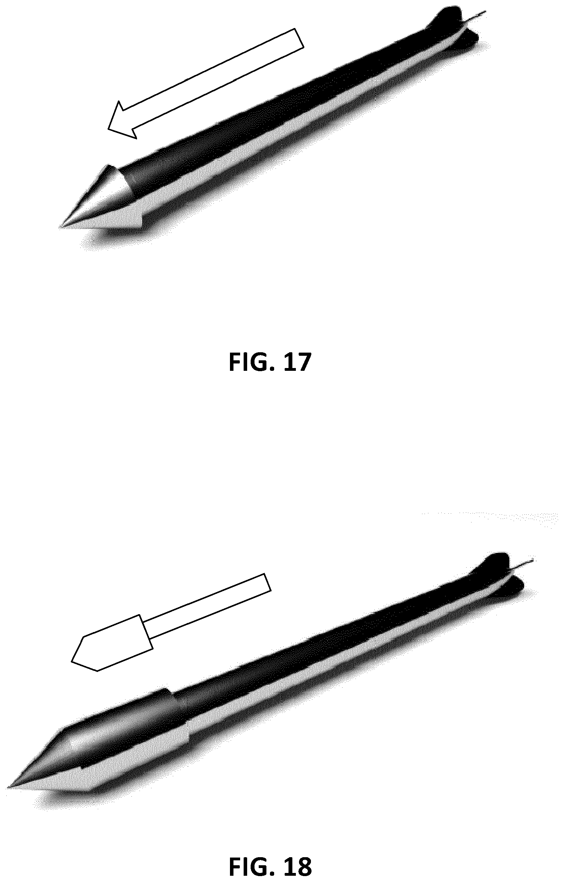

A particularly shaped free fall penetrometer is also described. The free fall penetrometer according to embodiments of the present aspect has a head suitable for impacting a layer at or near the bottom of a waterway and a distinguishable body. The body of the free fall penetrometer can also be referred to as a part of the free fall penetrometer that interacts later and less with a layer of the waterway than the head when the free fall penetrometer is used in a free fall penetrometer experiment. According to embodiments of the present invention, the head has a largest diameter - measured in a cross-section perpendicular to the length of the head - being larger than the diameter of the body - measured in a cross-section perpendicular to the length of the body - along at least 50% of the length of the body, advantageously along at least 75% of the length of the body, advantageously along the full length of the body. The head can be conically shaped. According to embodiments of the present invention, the body can also be referred to as the sleeve. According to particular embodiments, the head of the free fall Penetrometer thus can be an extended head, e.g. extended cone head, having a diameter being larger than the body, i.e. sleeve, of the penetrometer. In FIG. 17 an example of such an embodiment is shown. By intruding with a head with a larger diameter then the sleeve, the sleeve resistance is limited during intrusion. In alternative embodiments, the largest diameter of the head and also of a portion of the body, i.e. sleeve, may be larger than the diameter of the remaining portion of the body, i.e. sleeve. The portion of the body also having this larger diameter may be the portion of the body, i.e. sleeve, closest to the head. In FIG. 18 an example of such an extended head and sleeve portion is shown, the head and first sleeve portion having a larger diameter - taken for a cross-section perpendicular to the length of the body - than the diameter of the remaining sleeve portion. By intruding the sediment layers with such a free fall penetrometer, the sleeve resistance is limited to the resistance of extended first sleeve portion. The free fall penetrometer also may comprise other features, e.g. standard and/or optional features as described in embodiments or aspects elsewhere in the description or standard and/or optional features as known by the person skilled in the art.

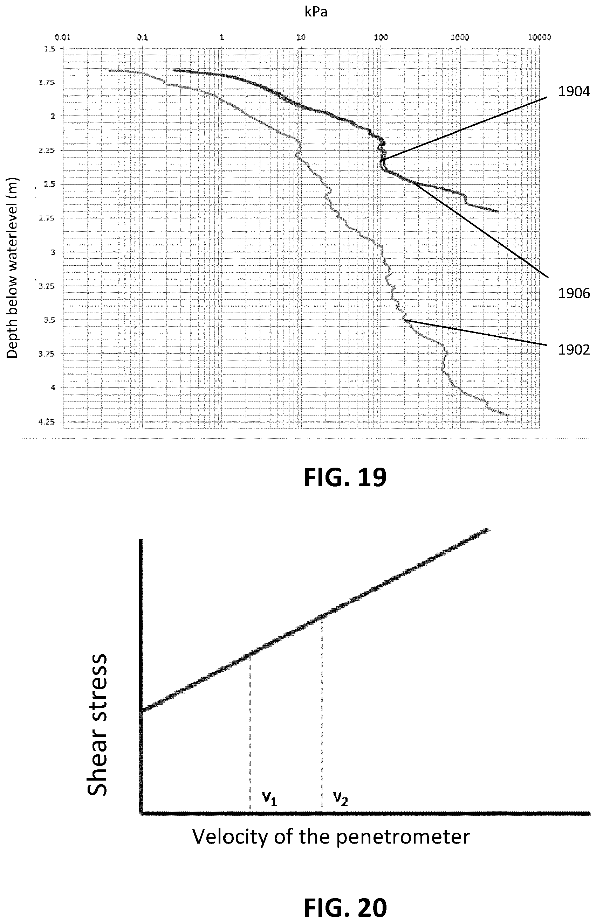

A method for obtaining information about a waterway is also disclosed. Obtaining information may for example comprise detecting the nautical bottom level under water, but also may include determining a soil structure or a soil type. The method according to embodiments of the present invention comprises receiving at least two sets of shear strength data on a single point in space (whereby a set comprises at least one value representative for strength data in the single point in space), a first set being obtained using a free fall penetrometer having an extended head as described in a particular embodiment in the previous aspect and a second set being obtained using a free fall penetrometer having an extended head and an extended first portion of the sleeve as described in another particular embodiment of the previous aspect, The method furthermore also may comprise determining, based on the two sets of data, the sleeve resistance . The determining may for example be performed by deducing by subtracting the total resistance of the combined by the point resistance on each depth. The total resistance is the resistance obtained using a free fall penetrometer having an extended cone head and an extended first portion of the sleeve. The point resistance is the resistance obtained using a free fall Penetrometer having only an extended head with a cone. By substracting the total resistance with the point resistance the sleeve resistance can be determined. In FIG. 19, two profiles are depicted, one taken with a free fall penetrometer with a pure point head without broadened sleeve 1902 (point resistance) and one taken with a free fall penetrometer with a combined extended point and sleeve head 1904 (total resistance). The third curve 1906 is the pure sleeve resistance as a result of the difference between total resistance and point resistance on each point of the falling curve. For obtaining each set of the shear strength data, methods may be used as described above in one or more embodiments or aspects disclosed in the present description. The method may comprise other features, e.g. standard and/or optional features as described in embodiments or aspects elsewhere in the description or standard and/or optional features as known by the person skilled in the art. The present invention also relates to a corresponding computerized method, processor for performing the method and a controller for controlling a free fall penetrometer system so as to perform the required measurements for the above described method.

In another aspect, the present invention relates to a method for obtaining information about a waterway. Obtaining information may for example comprise detecting the nautical bottom level under water, but also may include determining a soil structure or a soil type. The method according to embodiments of the present invention comprises varying the speed of the penetrometer intruding the sediment on a single area (a single point or a set of points being comparable to each other e.g. being sufficiently close to expect the same sediment structure) and collecting data for different speeds of a penetrometer and determining shear strength data for different speeds. It is to be noticed that it is unlikely that exactly the same point will be hit with the second free fall impact, but for two points sufficiently close, it is likely that a similar soil structure will occur. Determination of shear strength data may be performed using any of the methods as described above in one or more embodiments or aspects disclosed in the present description. The method comprises using the ratio of the difference in shear strength for different speeds to the difference in speed for determining the viscosity. The viscosity may be determined as the ratio of the difference in shear strength to the difference in speed used for the shear strength measurements. Varying the speed may be performed in a plurality of ways, such as for example by changing the weight of the penetrometer or changing the falling depth. The method thus is based on at least two different measurements. By way of illustration, the principle of the method is illustrated in FIG. 20. The shear stress as function of the velocity is shown The slope is representative for the viscosity of the sediment. The method may comprise other features, e.g. standard and/or optional features as described in embodiments or aspects elsewhere in the description or standard and/or optional features as known by the person skilled in the art. The present invention also relates to a corresponding computerized method, processor for performing the method and a controller for controlling a free fall penetrometer system so as to perform the required measurements for the above described method.

While the invention has been illustrated and described in detail in the drawings and foregoing description, such illustration and description are to be considered illustrative or exemplary and not restrictive. The invention is not limited to the disclosed embodiments.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A computerized system (200) for obtaining information regarding a waterway, the system comprising

    - an input means (210) for receiving accelerometer data from an accelerometer on a free fall impact device,
    - a processing means (220) being programmed for determining a speed of the free fall impact device by integration of the accelerometer data over time and for determining a position by integration of the speed over time, **characterized in that**
    - the processing means is adapted for deriving at least a density of a soil by solving the energy balance equation of a free fall impact device under water using the potential energy and kinetic energy and loss terms for buoyancy and drag based on the speed and the position as determined from accelerometer data and further based on at least a predetermined experimental drag coefficient, the mass and the volume of the free-fall impact device.

2. A computerized system (200) according to claim 1, wherein the processing means being adapted by solving the energy balance equation comprises
   the processing means being adapted for solving
   the energy balance equation given by

$$\frac{1}{2}mv_{in}^2 + mgh = \frac{1}{2}mv_{out}^2 + E_{loss}$$

wherein m is the mass of the free fall impact device and h is the length of the free fall path, the energy loss $E_{loss}$ is determined by

$$E_{loss} = E_{drag} + E_{displacement} = \rho.V.g.h + \tfrac{1}{2}.\rho.A.C_d.v^2.h$$

where p is the density, V is the volume of the free fall impact device, g is the gravity constant, A is the surface of the free fall impact device, v is the speed and $C_d$ is the drag coefficient for the free fall impact device.

3. A computerized system (200) according to any of claims 1 to 2, wherein the processing means is adapted for deriving shear stress, once the density is determined.

4. A computerized system (200) according to any of the previous claims, wherein the processing means (220) is programmed for deriving the density also based on a pore pressure.

5. A computerized system (200) according to any of the previous claims, the system (200) being adapted for co-operating with or comprising the free fall impact device (100) and the processing means (220) being programmed for taking into account, for a free fall impact device being an elongated impact device, a side surface along the length of the elongated impact device and/or for taking into account a diameter of the free fall impact device (100).

6. A computerized system (200) according to any of the previous claims, wherein the processing means is being programmed for deriving, based on said accelerometer data a depth of the soil.

7. A computerized system according to any of the previous claims, wherein the processing means (220) is being programmed for taking into account a pressure measurement obtained with said free fall impact device (100) or optical or mechanical sensor measurements obtained with said free fall impact device (100).

8. A computerized system (200) according to claim 7, wherein the processing means (220) is adapted for using said pressure or optical or mechanical sensor measurements for cross-checking, compensating or fine-tuning the obtained values of the density or depth.

9. A method for obtaining information regarding a waterway, the method comprising

- measuring the acceleration of a free fall impact device in a waterway and thereby acquiring accelerometer data,
- determining a speed of the free fall impact device by integration of the accelerometer data over time and for determining a position by integration of the speed over time, **characterized in that**
- said deriving comprises deriving at least a density of a soil by solving the energy balance equation of a free fall impact device under water using the potential energy and kinetic energy and loss terms for buoyancy and drag based on the speed and the position as determined from accelerometer data and further based on at least a predetermined experimental drag coefficient, the mass and the volume of the free-fall impact device.

10. A method according to claim 9, wherein the method comprises receiving pore pressure data as measured by a pressure sensor on the head of the impact device.

11. A method according to any of claims 9 to 10, the method comprising deriving, once the density is determined, based on said accelerometer data shear stress.

12. A free fall impact device (100) for obtaining information regarding a waterway, the free fall impact device (100) comprising an accelerometer (110) for determining accelerometer data and a computerized system (200) according to any of claims 1 to 8.

**Patentansprüche**

1. Computerisiertes System (200) zum Erhalten von Informationen bezüglich einer Abflussöffnung, das System umfassend

- ein Eingangsmittel (210) zum Empfangen von Beschleunigungsmesserdaten von einem Beschleunigungsmesser auf einer Freifalleinwirkungsvorrichtung,
- ein Verarbeitungsmittel (220), das programmiert ist, eine Geschwindigkeit der Freifalleinwirkungvorrichtung durch Integration der Beschleunigungsmesserdaten über Zeit zu ermitteln und eine Position durch Integration der Geschwindigkeit über Zeit zu ermitteln,
**dadurch gekennzeichnet, dass**
- das Verarbeitungsmittel angepasst ist, mindestens eine Dichte eines Bodens durch Lösen der Energieausgleichsgleichung einer Freifalleinwirkungsvorrichtung unter Wasser abzuleiten, unter Verwendung der potenziellen Energie und kinetischen Energie und Verlustterme für Auftrieb und Widerstand, basierend auf der Geschwindigkeit und der Position, wie aus Beschleunigungsmesserdaten ermittelt, und weiter basierend auf mindestens einem vorbestimmten experimentellen Widerstandskoeffizienten, der Masse und dem Volumen der Freifalleinwirkungsvorrichtung.

2. Computerisiertes System (200) nach Anspruch 1, wobei, dass das Verarbeitungsmittel durch Lösen der Energieausgleichsgleichung angepasst ist, umfasst,
dass das Verarbeitungsmittel angepasst ist, die Energieausgleichsgleichung zu lösen, die gegeben ist durch

$$\frac{1}{2}mv_{in}^2 + mgh = \frac{1}{2}mv_{out}^2 + E_{loss}$$

wobei m die Masse der Freifalleinwirkungsvorrichtung ist und h die Länge des Freifallwegs ist, wobei der Energieverlust $E_{loss}$ ermittelt ist durch

$$E_{loss} = E_{drag} + E_{displacement} = \rho.V.g.h. + \frac{1}{2}.\rho.A.C_d.v^2.h$$

wo $\rho$ die Dichte ist, V das Volumen der Freifalleinwirkungsvorrichtung ist, g die Schwerkraftkonstante ist, A die Oberfläche der Freifalleinwirkungsvorrichtung ist, v die Geschwindigkeit ist und $C_d$ der Widerstandskoeffizient für die Freifalleinwirkungsvorrichtung ist.

3. Computerisiertes System (200) nach einem der Ansprüche 1 bis 2, wobei das Verarbeitungsmittel angepasst ist, Scherspannung abzuleiten, sobald die Dichte ermittelt ist.

4. Computerisiertes System (200) nach einem der vorstehenden Ansprüche, wobei das Verarbeitungsmittel (220) programmiert ist, die Dichte auch basierend auf einem Porendruck abzuleiten.

5. Computerisiertes System (200) nach einem der vorstehenden Ansprüche, wobei das System (200) angepasst ist, mit der Freifalleinwirkungsvorrichtung (100) zusammenzuwirken oder diese zu umfassen, und wobei das Verarbeitungsmittel (220) programmiert ist, für eine Freifalleinwirkungsvorrichtung, die eine längliche Einwirkungsvorrichtung ist, eine Seitenfläche entlang der Länge der länglichen Einwirkungsvorrichtung zu berücksichtigen und/oder einen Durchmesser der Freifalleinwirkungsvorrichtung (100) zu berücksichtigen.

6. Computerisiertes System (200) nach einem der vorstehenden Ansprüche, wobei das Verarbeitungsmittel programmiert ist, basierend auf den Beschleunigungsmesserdaten eine Tiefe des Bodens abzuleiten.

7. Computerisiertes System nach einem der vorstehenden Ansprüche, wobei das Verarbeitungsmittel (220) programmiert ist, eine Druckmessung, die mit der Freifalleinwirkungsvorrichtung (100) erhalten wird, oder optische oder mechanische Sensormessungen, die mit der Freifalleinwirkungsvorrichtung (100) erhalten werden, zu berücksichtigen.

8. Computerisiertes System (200) nach Anspruch 7, wobei das Verarbeitungsmittel (220) angepasst ist, den Druck oder die optischen oder mechanischen Sensormessungen zu verwenden, um die erhaltenen Werte der Dichte oder Tiefe gegenzuprüfen, zu kompensieren oder feinabzustimmen.

9. Verfahren zum Erhalten von Informationen bezüglich einer Ablauföffnung, das Verfahren umfassend

   - Messen der Beschleunigung einer Freifalleinwirkungsvorrichtung in einer Ablauföffnung und dadurch Beschaffen von Beschleunigungsmesserdaten;
   - Ermitteln einer Geschwindigkeit der Freifalleinwirkungsvorrichtung durch Integration der Beschleunigungsmesserdaten über Zeit und zum Ermitteln einer Position durch Integration der Geschwindigkeit über Zeit, **dadurch gekennzeichnet, dass**
   - das Ableiten ein Ableiten mindestens einer Dichte eines Bodens umfasst, durch Lösen der Energieausgleichsgleichung einer Freifalleinwirkungsvorrichtung unter Wasser unter Verwendung der potenziellen Energie und kinetischen Energie und Verlustterme für Auftrieb und Widerstand basierend auf der Geschwindigkeit und der Position, wie aus Beschleunigungsmesserdaten ermittelt und weiter basierend auf mindestens einem vorbestimmten experimentellen Widerstandskoeffizienten der Masse und dem Volumen der Freifalleinwirkungsvorrichtung.

10. Verfahren nach Anspruch 9, wobei das Verfahren Empfangen von Porendruckdaten umfasst, wie durch einen Drucksensor an dem Kopf der Einwirkungsvorrichtung gemessen.

11. Verfahren nach einem der Ansprüche 9 bis 10, wobei das Verfahren, sobald die Dichte ermittelt ist, ein Ableiten basierend auf der Beschleunigungsmesserdaten-Scherspannung umfasst.

12. Freifalleinwirkungsvorrichtung (100) zum Erhalten von Informationen bezüglich einer Ablauföffnung, wobei die Freifalleinwirkungsvorrichtung (100) einen Beschleunigungsmesser (110) zum Ermitteln von Beschleunigungsmesserdaten und ein computerisiertes System (200) nach einem der Ansprüche 1 bis 8 umfasst.

## Revendications

1. Système informatisé (200) pour obtenir des informations concernant une voie navigable, le système comprenant

   - un moyen d'entrée (210) pour recevoir des données d'accéléromètre provenant d'un accéléromètre sur un dispositif d'impact en chute libre,
   - un moyen de traitement (220) programmé pour déterminer une vitesse du dispositif d'impact en chute libre par l'intégration des données d'accéléromètre par rapport au temps et pour déterminer une position par l'intégration de la vitesse par rapport au temps,
   **caractérisé en ce que**
   - le moyen de traitement est adapté pour dériver au moins une densité d'un sol par la résolution de l'équation de bilan énergétique d'un dispositif d'impact en chute libre sous l'eau en utilisant l'énergie potentielle et l'énergie cinétique et les termes de perte pour la flottabilité et la trainée sur la base de la vitesse et de la position telles que déterminées à partir des données d'accéléromètre et en outre sur la base d'au moins un coefficient de traînée expérimental prédéterminé, de la masse et du volume du dispositif d'impact en chute libre.

2. Système informatisé (200) selon la revendication 1, dans lequel le moyen de traitement adapté par la résolution de l'équation de bilan énergétique comprend
   le moyen de traitement étant adapté pour la résolution
   de l'équation de bilan énergétique donnée par

$$\frac{1}{2}mv_{in}^2 + mgh = \frac{1}{2}mv_{out}^2 + E_{loss}$$

dans laquelle m est la masse du dispositif d'impact en chute libre et h est la hauteur du trajet en chute libre, la perte d'énergie $E_{loss}$ est déterminée par

$$E_{loss} = E_{drag} + E_{displacement} = \rho.V.g.h + \tfrac{1}{2}.\rho.A.C_d.v^2.h$$

où p est la densité, V est le volume du dispositif d'impact en chute libre, g est la constante de la pesanteur, A est la surface du dispositif d'impact en chute libre, v est la vitesse et $C_d$ est le coefficient de traînée pour le dispositif d'impact en chute libre.

3. Système informatisé (200) selon l'une quelconque des revendications 1 et 2, dans lequel le moyen de traitement est adapté pour dériver une contrainte de cisaillement, dès que la densité est déterminée.

4. Système informatisé (200) selon l'une quelconque des revendications précédentes, dans lequel le moyen de traitement (220) est programmé pour dériver la densité également sur la base d'une pression interstitielle.

5. Système informatisé (200) selon l'une quelconque des revendications précédentes, le système (200) étant adapté pour coopérer avec ou comprenant le dispositif d'impact en chute libre (100) et le moyen de traitement (220) étant programmé pour prendre en compte, pour un dispositif d'impact en chute libre qui est un dispositif d'impact allongé, une surface latérale le long de la longueur du dispositif d'impact allongé et/ou pour prendre en compte un diamètre du dispositif d'impact en chute libre (100).

6. Système informatisé (200) selon l'une quelconque des revendications précédentes, dans lequel le moyen de traitement est programmé pour dériver, sur la base desdites données d'accéléromètre une profondeur du sol.

7. Système informatisé selon l'une quelconque des revendications précédentes, dans lequel le moyen de traitement (220) est programmé pour prendre en compte une mesure de pression obtenue avec ledit dispositif d'impact en chute libre (100) ou des mesures de capteur optique ou mécanique obtenues avec ledit dispositif d'impact en chute libre (100).

8. Système informatisé (200) selon la revendication 7, dans lequel le moyen de traitement (220) est adapté pour utiliser lesdites mesures de capteur de pression ou optique ou mécanique pour vérifier par recoupement, compenser ou ajuster avec précision les valeurs obtenues de la densité ou de la profondeur.

9. Procédé pour obtenir des informations concernant une voie navigable, le procédé comprenant

- la mesure de l'accélération d'un dispositif d'impact en chute libre dans une voie navigable et ainsi l'acquisition de données d'accéléromètre,
- la détermination d'une vitesse du dispositif d'impact en chute libre par l'intégration des données d'accéléromètre par rapport au temps et pour déterminer une position par l'intégration de la vitesse par rapport au temps, **caractérisé en ce que**
- ladite dérivation comprend la dérivation d'au moins une densité d'un sol par la résolution de l'équation de bilan énergétique d'un dispositif d'impact en chute libre sous l'eau en utilisant l'énergie potentielle et l'énergie cinétique et les termes de perte pour la flottabilité et la trainée sur la base de la vitesse et de la position telles que déterminées à partir des données d'accéléromètre et en outre sur la base d'au moins un coefficient de traînée expérimental prédéterminé, de la masse et du volume du dispositif d'impact en chute libre.

10. Procédé selon la revendication 9, dans lequel le procédé comprend la réception de données de pression interstitielle telles que mesurées par un capteur de pression sur la tête du dispositif d'impact.

11. Procédé selon l'une quelconque des revendications 9 et 10, le procédé comprenant la dérivation, dès que la densité est déterminée, sur la base desdites données d'accéléromètre d'une contrainte de cisaillement.

12. Dispositif d'impact en chute libre (100) pour obtenir des informations contenant une voie navigable, le dispositif d'impact en chute libre (100) comprenant un accéléromètre (110) pour déterminer des donnés d'accéléromètre et un système informatisé (200) selon l'une quelconque des revendications 1 à 8.

100

200

240

230

220

120

210

110

**FIG. 1**

$F_{UP} = m.a$

$F_{DOWN} = m.g$

**FIG. 2**

FIG. 3

**FIG. 4**

**FIG. 5**

FIG. 6

FIG. 7

802

804

**FIG. 8**

902

**FIG. 9**

FIG. 10

FIG. 11

FIG. 12

**FIG. 13**

**FIG. 14**

FIG. 15

FIG. 16

**FIG. 17**

**FIG. 18**

**FIG. 19**

**FIG. 20**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4492111 A
- US 5681982 A
- EP 2136180 A